# FASCICULE DE BREVET EUROPEEN

(11) **EP 2 206 347 B1**
(45) Date de publication et mention de la délivrance du brevet: **13.04.2011**
(21) Numéro de dépôt: 08840382.9
(22) Date de dépôt: 25.09.2008
(51) Int. Cl.: H04N 7/173

(54) **PROCEDE ET SYSTEME DE TELECOMMUNICATIONS INTERACTIF ENTRE AU MOINS DEUX DISPOSITIFS DE COMMUNICATION VIA LEURS MOYENS DE CONNEXION RESEAU RESPECTIFS**
VERFAHREN UND SYSTEM FÜR INTERAKTIVE TELEKOMMUNIKATION ZWISCHEN MINDESTENS ZWEI KOMMUNIKATIONSGERÄTEN ÜBER IHRE JEWEILIGEN NETZVERBINDUNGSMITTEL
METHOD AND SYSTEM FOR INTERACTIVE TELECOMMUNICATION BETWEEN AT LEAST TWO COMMUNICATION DEVICES VIA THEIR RESPECTIVE NETWORK CONNECTION MEANS

(30) Priorité: 28.09.2007 FR 0757943
(43) Date de publication de la demande: 14.07.2010
(73) Titulaire: FRANCE TELECOM, 75015 Paris (FR)
(72) Inventeur: HUGONIN, Rémy, W9 3LL LONDON (GB); LECHERVY, Yves, F-91700 Ste Genevieve des Bois (FR)
(86) Numéro de dépôt international: PCT/FR2008/051710
(87) Numéro de publication internationale: WO 2009/050373

(56) Documents cités:
- WO-A-2007/109566
- CHI-CHIA LIN ET AL: "On Controlling Digital TV Set-Top-Box by Mobile Devices via IP Network" 12 décembre 2005 (2005-12-12), MULTIMEDIA, SEVENTH IEEE INTERNATIONAL SYMPOSIUM ON IRVINE, CA, USA 12-14 DEC. 2005, PISCATAWAY, NJ, USA,IEEE, PAGE(S) 52 - 59 , XP010870514 ISBN: 978-0-7695-2489-4 le document en entier
- SHIH-HSIANG, LO ET AL.: "Controlling Digital TV Set-Top Box with Mobile Devices via an IP Network" IEEE TRANSACTIONS ON CONSUMER ELECTRONICS, vol. 52, no. 3, août 2006 (2006-08), pages 935-942, XP002480303
- RITTWIK JANA ET AL: "Clicker - An IPTV Remote Control in Your Cell Phone" MULTIMEDIA AND EXPO, 2007 IEEE INTERNATIONAL CONFERENCE ON, IEEE, PI, 1 juillet 2007 (2007-07-01), pages 1055-1058, XP031123810 ISBN: 978-1-4244-1016-3

## Description

### Arrière-plan de l'invention

La présente invention concerne un procédé et un système de télécommunications interactif entre au moins deux dispositifs de communication via au moins un réseau de communication.

Plus particulièrement, un tel procédé et un tel système visent le partage de contenus interactifs entre les deux dispositifs, dans un réseau de communication, ce réseau pouvant être de tout type et notamment de type "commutation de circuits" ou "commutation de paquets" Les deux dispositifs se comportent ainsi vis-à-vis l'un de l'autre comme un client et un serveur dans le réseau de communication, selon divers contextes d'interaction possibles. Parmi ces contextes, on peut citer par exemple:
- l'interaction d'un dispositif, tel que par exemple un téléphone mobile, avec un autre dispositif, tel que par exemple un téléviseur, en particulier en vue de commander l'affichage sur l'écran du téléviseur, à l'initiative du téléphone mobile,
- l'interaction d'un dispositif, tel que par exemple un téléphone mobile, avec un autre dispositif, tel que par exemple un ordinateur, en particulier en vue de partager un itinéraire routier entre le téléphone mobile et l'écran de l'ordinateur.

Un procédé et système du type ci-dessus sont par exemple décrits dans le document WO 2005/025194. Un dispositif, tel que par exemple un téléphone mobile, communique de façon interactive, via une télécommande située dans un réseau de communication sans fil, avec un autre dispositif, tel que par exemple un téléviseur, un magnétoscope, etc.... Ainsi par exemple, un téléphone mobile qui reçoit un message vidéo est capable d'envoyer une requête à un téléviseur pour que ce dernier affiche, en réponse, le message vidéo sur son propre écran. La requête en provenance du téléphone mobile est interceptée, puis traitée par la télécommande qui la retransmet elle-même au téléviseur.

L'inconvénient du procédé et du système précités réside dans le fait que :
- la requête transmise dans le réseau par le téléphone mobile ne parvient pas en temps réel à destination du téléviseur, un traitement relativement complexe, et donc long, devant être effectué au préalable par la télécommande,
- le contexte d'utilisation est limité, la télécommande étant seulement capable :
- de recevoir des requêtes provenant uniquement d'un seul dispositif de communication, qui plus est, d'un seul type, puisque le dispositif impliqué est un téléphone mobile,
- de transmettre les requêtes à destination uniquement d'un seul dispositif, qui plus est, d'un seul type, puisque le dispositif impliqué est un téléviseur.

Un autre procédé et système du type ci-dessus sont décrits par exemple dans le document CHI-CHIA LIN ET AL : « On Controlling Digital TV Set-Top-Box by Mobile Devices via IP Network » 12 décembre 2005 (2005-12-12), MULTIMEDIA, SEVENTH IEEE INTERNATIONAL SYMPOSIUM ON IRVINE, CA, USA 12-14 DEC.2005, PISCATAWAY, NJ, USA, IEEE, PAGE(S) 52-59, XP010870514 ISBN :978-0-7695-2489-4. Selon un tel procédé, un premier dispositif de communication, tel qu'un téléphone mobile, communique de façon interactive avec un second dispositif de communication, tel qu'une Set-Top- Box, via un réseau de communication, en particulier de type IP. Le système décrit dans ce document effectue la détection d'un événement sur le téléphone mobile, la transmission et la réception d'une requête correspondante, ainsi que la détermination et le déclenchement de l'action appropriée au niveau de la Set-Top-Box.

L'inconvénient d'un tel procédé et système réside également dans la limitation du contexte d'utilisation, puisqu'ils impliquent uniquement la présence de deux dispositifs bien particuliers pouvant communiquer ensemble de façon interactive, à savoir un téléphone mobile et une Set-Top-Box.

Le but de l'invention est de supprimer le caractère limitatif du contexte d'utilisation précité, en permettant l'interaction entre au moins deux dispositifs de communication, quels que soient leurs types, et quel(s) que soi(en)t le(s) réseau(x) de communication via le(s)quel(s) ils sont susceptibles de communiquer.

Au sens de l'invention, on entend par "dispositif de communication", tout dispositif comportant un module de connexion à un réseau de communication. Il peut s'agir :
- soit d'un terminal de communication fixe (ordinateur de type PC, portable, téléphone fixe, etc...), soit d'un terminal de communication mobile (téléphone mobile, assistant numérique personnel (PDA), console de jeux, etc...),
- soit de tout autre appareil doté d'un module de connexion à un réseau de communication, comme par exemple certains réfrigérateurs actuels dont la fonction initiale n'était pas la communication en réseau, ou encore certains écrans connectés dans les lieux publics (gares, supermarchés, etc....).

### Objet et résumé de l'invention

Selon un premier aspect, l'invention concerne un procédé de télécommunications interactif entre au moins des premier et second dispositifs de communication munis respectivement de moyens de connexion à un réseau de communication, ledit procédé comprenant les étapes de :
- transmission, depuis les moyens de connexion du second dispositif de communication vers un dispositif de transmission, d'une requête en fourniture d'une action à effectuer par le second dispositif à l'initiative du premier dispositif,
- recherche périodique, dans le dispositif de transmission, afin de déterminer si ce dernier contient un identifiant reçu en provenance du premier dispositif et correspondant à une action à effectuer par le second dispositif,
- si le résultat de la recherche est positif, transmission depuis le dispositif de transmission vers le second dispositif de communication, d'une requête contenant l'identifiant trouvé,
- détermination, au niveau des moyens de connexion du second dispositif de communication, de l'action à effectuer par le second dispositif à l'initiative du premier dispositif, à partir de l'identifiant contenu dans la requête reçue,
- déclenchement de l'action déterminée par le second dispositif.

Corrélativement, l'invention concerne un système de télécommunications interactif entre au moins des premier et second dispositifs de communication munis respectivement de moyens de connexion à un réseau de communication, ledit système étant caractérisé en ce qu'il comprend un dispositif de transmission qui comprend:
- des premiers moyens de communication pour recevoir, en provenance des moyens de connexion du second dispositif de communication, une requête en fourniture d'une action à effectuer par le second dispositif à l'initiative du premier dispositif,
- des moyens de traitement pour :
   - rechercher périodiquement si le dispositif de transmission contient un identifiant reçu en provenance du premier dispositif et correspondant à une action à effectuer par le second dispositif,
   - extraire l'identifiant trouvé dans le cas où le résultat de la recherche est positif,
- des seconds moyens de communication pour transmettre au second dispositif de communication une requête contenant l'identifiant trouvé,
et en ce que les moyens de connexion du second dispositif comportent des moyens de réception de la requête transmise, des moyens de traitement pour déterminer, à partir de l'identifiant contenu dans la requête reçue, une action à effectuer par le second dispositif à l'initiative du premier dispositif, et des moyens de commande pour déclencher l'action déterminée sur le second dispositif.

Ces procédé et système de télécommunications sont donc adaptés pour permettre une communication interactive en temps réel entre au moins deux dispositifs qui peuvent être chacun de n'importe quel type, du moment qu'ils comprennent chacun des moyens de connexion à un réseau de communication, tels que par exemple un navigateur.

Il est ainsi possible d'envisager de nombreux contextes d'utilisation possibles, selon les différents dispositifs susceptibles d'être impliqués, qu'ils soient de type mobile ou fixe, et selon le ou les réseaux de communication, via le ou lesquels, les dispositifs seront susceptibles de communiquer.

Au sens de l'invention, on entend par "événement", une action déclenchée sur certains éléments des dispositifs précités, en particulier sur les interfaces utilisateurs. Dans le cas par exemple d'un dispositif de communication fixe, il peut s'agir par exemple de l'appui sur une touche d'un clavier, si le terminal fixe est un ordinateur. Dans le cas par exemple d'un dispositif de communication mobile, il peut s'agir par exemple:
- du déclenchement de la sonnerie du terminal, si le terminal mobile est un téléphone,
- du déplacement d'un stylet sur une zone particulière de l'écran du terminal, si le terminal mobile est un PDA,
- etc....

Dans un mode particulier de réalisation de l'invention, au niveau des moyens de connexion du premier dispositif, l'identifiant correspondant à une action à effectuer par le second dispositif est associé à un événement qui est :
- déclenché sur le premier dispositif de communication,
- détecté par les moyens de connexion du premier dispositif,
- transmis au dispositif de transmission dans une requête en signalisation de l'événement détecté.

La mise en correspondance d'un unique identifiant avec d'une part, un évenement déclenché sur le premier dispositif en vue de déclencher une action sur le second dispositif, et d'autre part, avec ladite action, permet de parvenir, de façon simple, au partage interactif de contenus virtuels entre au moins deux utilisateurs, quel que soit le type de dispositif utilisé par chacun d'entre eux, du moment que ces dispositifs comportent chacun des moyens de connexion à un réseau de communication, tels que par exemple un navigateur.

Corrélativement ce procédé est mis en oeuvre dans un dispositif de transmission d'informations comprenant:
- des premiers moyens de communication pour recevoir, en provenance d'un dispositif de communication, une requête en fourniture d'une action à effectuer par ledit dispositif à l'initiative d'un autre dispositif de communication,
- des moyens de traitement pour :
   - rechercher périodiquement si le dispositif de transmission contient un identifiant reçu en provenance de l'autre dispositif et correspondant à une action à effectuer par le dispositif requérant,
   - extraire l'identifiant trouvé dans le cas où le résultat de la recherche est positif,
- des seconds moyens de communication pour transmettre à destination du dispositif requérant, une requête contenant l'identifiant trouvé.

Un tel dispositif présente l'avantage d'assurer une gestion centralisée des événements et des requêtes susceptibles d'être transmis entre les différents dispositifs de communications impliqués.

Selon une implémentation particulière de invention, les différentes étapes du procédé de télécommunications interactif sont déterminées par des instructions de programmes d'ordinateur.

En conséquence l'invention vise aussi un programme d'ordinateur sur un support d'informations, ce programme étant susceptible d'être mis en oeuvre dans un ordinateur, ce programme comportant des instructions adaptées à la mise en oeuvre d'un procédé de télécommunications interactif.

Ce programme peut utiliser n'importe quel langage de programmation, et être sous la forme de code source, code objet, ou de code intermédiaire entre code source et code objet, tel que dans une forme partiellement compilée ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins qui en illustrent deux exemples de réalisation dépourvus de tout caractère limitatif, et dans lesquels :
- la figure 1 représente un système de télécommunications interactif conforme à l'invention dans un premier mode particulier de réalisation ;
- la figure 2 représente, sous forme d'organigramme, les principales étapes d'un procédé de télécommunications interactif conforme à l'invention dans un premier mode particulier de réalisation;
- la figure 3 représente un système de télécommunications interactif conforme à l'invention dans un second mode particulier de réalisation ;
- la figure 4 représente, sous forme d'organigramme, les principales étapes d'un procédé de télécommunications interactif conforme à l"invention dans un second mode particulier de réalisation.

### Description détaillée d'un premier mode de réalisation

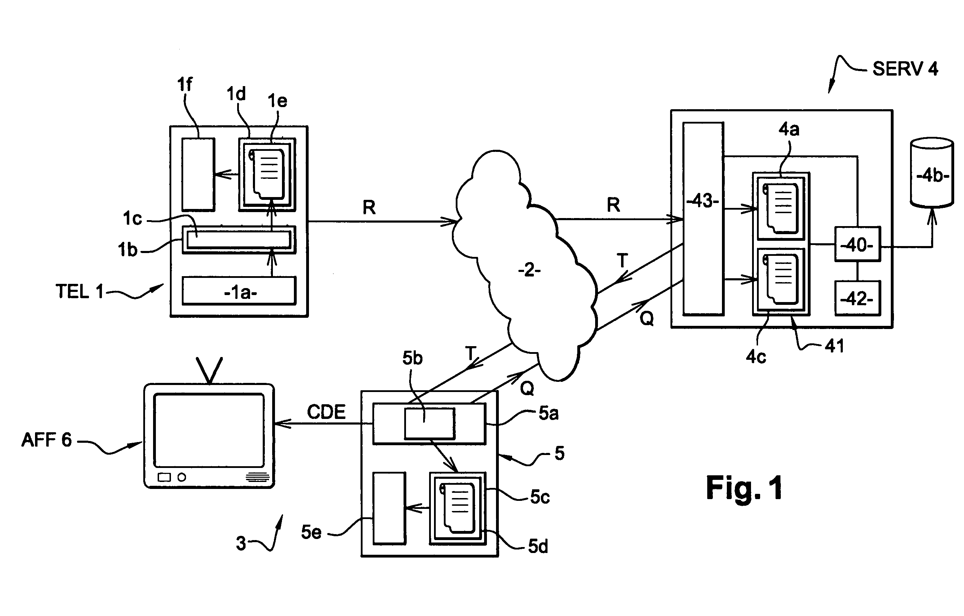

En référence à la figure 1, le système de télécommunications est décrit selon un premier mode de réalisation qui correspond à un premier contexte d'utilisation possible de l'invention.

Dans le mode de réalisation décrit, il s'agit d'un contexte vidéo, selon lequel un utilisateur souhaite interagir en temps réel avec les services proposés sur son téléviseur. Le type d'interactions possibles est par exemple la modification par l'utilisateur du contenu d'une page affichée sur l'écran de son téléviseur. Une telle modification peut prendre de multiples formes se traduisant respectivement par de multiples actions à effectuer par le téléviseur (défilement de la page affichée vers le bas ou vers le haut, changement de page, arrêt sur image, etc...).

En référence à la figure 1, le système comprend:
- un premier dispositif de communication 1 appartenant à l'utilisateur,
- un réseau de communication 2,
- un second dispositif de communication 3 apte à communiquer de façon interactive avec le dispositif 1, via le réseau 2,
- un serveur d'informations SERV 4 apte à communiquer, via le réseau 2, d'une part avec le dispositif 1, et d'autre part, avec le dispositif 3.

Dans le mode de réalisation décrit, le réseau 2 est de type Internet.

Dans le mode de réalisation décrit, le dispositif 1 est un téléphone mobile TEL qui comporte :
- une interface utilisateur 1a, telle que par exemple, un clavier,
- un module 1b de connexion au réseau 2, tel que par exemple un navigateur Web, qui comporte une interface de communication 1c apte à détecter le déclenchement d'un événement sur le téléphone mobile 1, tel que par exemple l'appui, par l'utilisateur, sur une touche (non représentée) du clavier 1a,
- une mémoire 1d qui comporte un module applicatif 1e apte à être lancé par le navigateur Web 1b à chaque fois qu'un événement se déclenche sur certains éléments du téléphone 1, en particulier sur le clavier 1a, afin de transmettre au serveur SERV 4, dans le réseau 2, via un réseau mobile (non représenté), une requête R, par exemple de type http, signalant chaque événement détecté.

Dans le mode de réalisation décrit, le téléphone mobile TEL 1 est adapté pour transmettre au dispositif 3 des commandes saisies par l'utilisateur à l'aide des touches du clavier 1a. Parmi ces touches figurent par exemple les touches « menu », « OK », flèches « sens gauche »/ « sens droite », « sens montant »/ « sens descendant », chiffres « 0 » à « 9 », etc....

A cet effet, le téléphone mobile TEL 1 comprend en outre une mémoire 1f dans laquelle sont mémorisés au préalable, par exemple sous forme d'une liste, les codes associés respectivement aux touches précitées.

De façon connue en soi, le serveur SERV 4 a l'architecture matérielle d'un ordinateur. Il comporte un processeur 40, une mémoire morte 41, une mémoire vive 42, et des moyens 43 de communication avec le téléphone mobile TEL 1 de l'utilisateur ou avec le dispositif 3, tels que par exemple une interface de type Internet.

Plus particulièrement, le serveur SERV 4 comprend en outre :
- un premier module applicatif 4a stocké dans la mémoire morte 41 et apte à être lancé dès réception, dans le serveur 4, d'une requête http R du type précitée,
- une base de données 4b apte à mémoriser le type d'événement détecté, contenu dans chaque requête http R reçue,
- un second module applicatif 4c stocké dans la mémoire morte 41 et apte à être lancé dès mémorisation d'au moins un type d'événement détecté, afin que l'interface 43 transmette au dispositif 3, dans le réseau 2, une requête T contenant l'événement mémorisé à partir de laquelle le dispositif 3 déclenchera une action déterminée telle que souhaitée par l'utilisateur détenteur du téléphone mobile TEL 1.

Le serveur d'information SERV 4 dispose également d'une interface lui permettant d'interroger la base de données 4b.

Dans le mode de réalisation décrit, le dispositif 3 est un téléviseur qui comporte un récepteur TV 5 relié à un dispositif d'affichage AFF 6, qui peuvent être intégrés ou non. Dans ce dernier cas, le récepteur TV 5 est par exemple une « set-top-box » STB.

Le récepteur TV 5 comporte en particulier:
- un module 5a de connexion au réseau 2, tel que par exemple un navigateur Web, qui comporte une interface de communication 5b, par exemple de type Wifi, apte à envoyer, à destination du dispositif d'affichage AFF 6, une commande CDE de modification du contenu de la page affichée,
- une mémoire 5c qui comporte un module applicatif 5d apte à être lancé par le navigateur Web 5a dès réception, en provenance du serveur SERV 4, de la requête T reçue, de façon :
   - à déterminer, à partir du type d'événement contenu dans la requête T reçue, un type d'action à effectuer par le téléviseur,
   - puis à interpréter ladite action sous la forme d'une commande CDE de modification du contenu de la page affichée et destinée à être envoyée au dispositif d'affichage AFF 6, via l'interface de communication 5b.

A cet effet, le récepteur TV 5 comprend en outre une mémoire 5e dans laquelle sont mémorisés au préalable, sous forme par exemple d'une liste, les codes associés respectivement aux touches précitées, en association respectivement avec les actions à effectuer sur le dispositif d'affichage AFF 6.

Dans le contexte vidéo représenté sur la figure 1, citons par exemple le cas où l'utilisateur du téléphone mobile TEL 1 souhaite passer, à l'aide de ce dernier, à la page suivante de celle affichée sur le dispositif d'affichage AFF 6. Dans ce contexte, la touche ">" du téléphone mobile TEL 1 est associée à un code particulier C qui est stocké préalablement dans la mémoire 1f du téléphone mobile TEL 1. Ce même code C est également préalablement stocké dans la mémoire 5e du récepteur TV 5, en association avec un code d'action CA destiné à être interprété par le module applicatif 5d comme une commande CDE de passage à la page suivante.

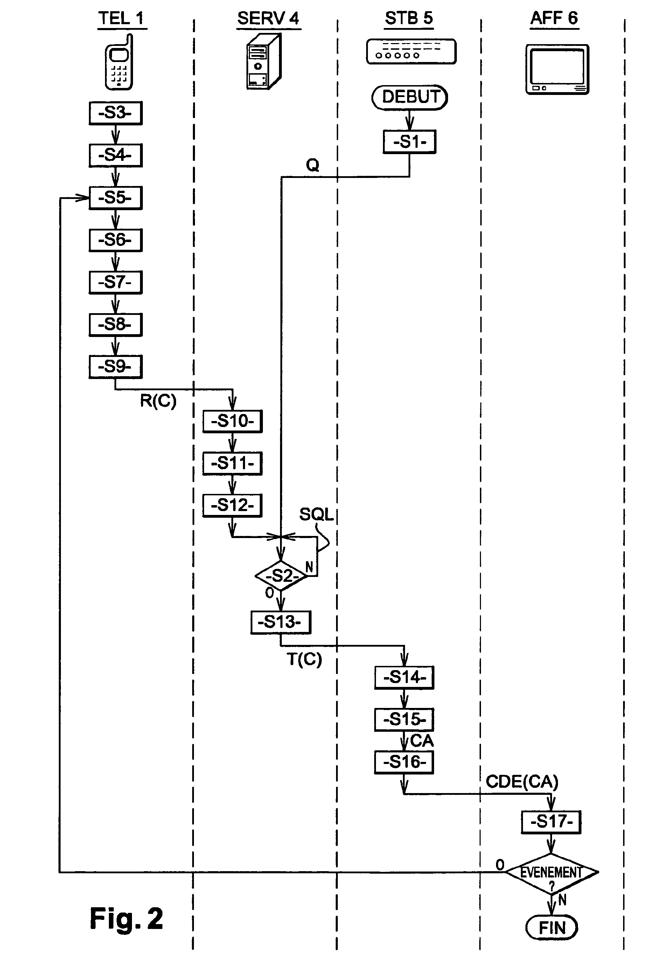

Dans le mode de réalisation représenté à la figure 1, les différents modules applicatifs utilisés 1e, 4a, 4c et 5d sont des bouts de programmes informatiques écrits de préférence en langage Javascript. Ces différents programmes informatiques sont adaptés à exécuter les principales étapes du procédé de télécommunications selon l'invention, ces principales étapes étant représentées sous la forme d'un organigramme qui va être décrit ci-dessous en référence à la figure 2.

Un utilisateur, détenteur du téléphone mobile TEL 1, souhaite par exemple, à l'aide de ce dernier, passer à la page suivante de celle affichée sur le dispositif d'affichage AFF 6.

Au cours d'une étape préalable S1, le navigateur Web 5a du récepteur TV 5 transmet, via le réseau 2, à destination du serveur SERV 4, une requête Q (cf fig.1) en fourniture d'une action à déclencher sur le dispositif d'affichage AFF 6. La requête Q est par exemple de type http et se présente par exemple de la façon suivante:
GET http://161.106.104.24/?action=listen_events HTTP/1.0
User-Agent: TV browser 3.2
Accept: text/xml,application/xml,application/xhtml+xml,text/html
Accept-Language: fr,fr-fr;q=0.8,en-us;q=0.5,en;q=0.3
Accept-Encoding: gzip,deflate
Accept-Charset: ISO-8859-1

Suite à la réception de cette requête, l'interface 43 du serveur SERV 4 lance le module applicatif 4c, ce qui déclenche, au cours d'une étape S2, une interrogation périodique de la base de données 4b, par exemple sous la forme de requêtes SQL, afin de déterminer si un événement y a été mémorisé.

Le serveur SERV 4 est bien entendu adapté pour envoyer une requête au récepteur TV 5, selon laquelle aucun événement n'a été reçu, dans le cas où le serveur SERV 4 ne reçoit pas d'événement au bout d'une certaine durée prédéterminée.

Au cours d'une étape S3, l'utilisateur allume son téléphone mobile TEL 1 et sélectionne, dans un menu déroulant qui s'affiche sur l'écran du téléphone, le champ "télécommande". Au cours d'une étape S4, s'affiche sur l'écran précité une table de correspondance associant chaque touche du clavier 1a du téléphone 1 à une action particulière à effectuer par le téléviseur 3. Dans l'exemple représenté, l'utilisateur visualise sur l'écran que, par exemple, pour passer à la page suivante, il faut appuyer sur la touche ">" de son téléphone 1. Au cours d'une étape S5, l'utilisateur appuie sur cette touche. Au cours d'une étape S6, l'interface de communication 1c du navigateur Web 1b détecte cet événement. Suite à cette détection, au cours d'une étape S7, le navigateur Web 1b lance le module applicatif 1e. Au cours d'une étape S8, ce dernier appelle la liste stockée dans la mémoire 1f du téléphone mobile 1 de façon à extraire le code C correspondant à la touche ">". Le navigateur 1b déclenche ensuite, au cours d'une étape S9, à destination du serveur SERV 4, via le réseau 2, une requête R, de type http, contenant le code C. La requête R se présente par exemple de la façon suivante:
GET
http://161.106.104.24/?action=keypress&key=rgtarrow&from=mobile HTTP/1.0
User-Agent: mobile browser 8.3
Accept: application/xml,application/xhtml+xml,text/html
Accept-Language: fr,fr-fr,en-us;
Accept-Encoding: deflate
Accept-Charset: ISO-8859-1

Après avoir reçu, lors d'une étape S10, la requête http R précitée en provenance du téléphone mobile TEL 1, l'interface 43 du serveur SERV 4 lance le module applicatif 4a, ce qui déclenche, au cours d'une étape S11, la mémorisation, dans la base de données 4b, du code C.

Une fois le code C mémorisé, et en réponse à la/les interrogation(s) de l'étape S2, le module applicatif 4c extrait, au cours d'une étape S12, le code C mémorisé. Cette extraction entraîne, au cours d'une étape S13, la transmission par l'interface de communication 43 du serveur SERV 4, et en réponse à la requête initiale Q en provenance du récepteur STB 5, d'une requête T de type http, contenant le code C. La requête T se présente par exemple de la façon suivante:
HTTP/1.0 200 OK
Date: Wed, 26 Nov 2006 06:34:59 GMT
Content-Length: 125
Content-Type: text/html; charset=UTF-8
Proxy-Connection: keep-alive
Content-Encoding: gzip
< Event> Keypress</Event> <Key> RightArrow</Key><From>Mobile</Fr om>

Suite à la réception de cette requête, le navigateur Web 5a lance le module applicatif 5d au cours d'une étape S14. Au cours d'une étape S15, ce dernier appelle la liste stockée dans la mémoire 5e du récepteur STB 5, de façon à extraire, à partir du code C contenu dans la requête T reçue, le code d'action CA correspondant, dans l'exemple représenté, à la commande CDE de passage à la page suivante.

Une fois le code d'action CA extrait, l'interface Wifi 5b du navigateur Web 5a, au cours d'une étape S16, transmet ce code d'action CA sous la forme d'une commande CDE à destination du dispositif d'affichage AFF 6.

En réponse, au cours d'une étape S17, le dispositif d'affichage AFF 6 effectue la commande CDE reçue et affiche la page suivante.

### Description détaillée d'un second mode de réalisation

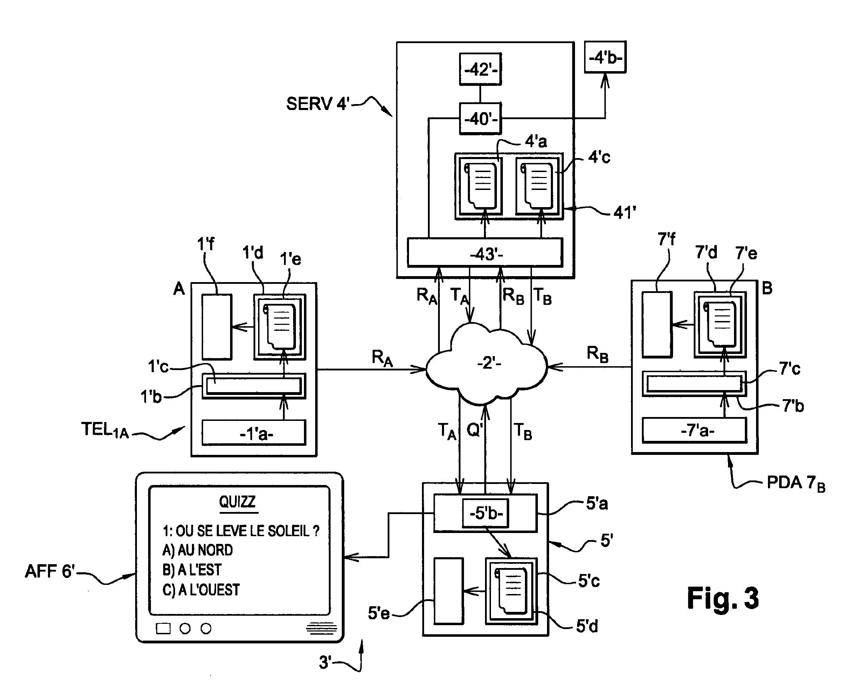

En référence à la figure 3, le système de télécommunications est décrit selon un second mode de réalisation qui correspond à un second contexte d'utilisation possible de l'invention.

Dans le mode de réalisation décrit, il s'agit d'un contexte de jeux vidéo, selon lequel plusieurs utilisateurs, par exemple deux, souhaitent jouer ensemble en réseau, en interagissant tous deux avec un écran commun sur lequel est affiché le jeu. L'écran appartient à un dispositif doté de moyens de connexion à un réseau de communication (ordinateur, téléviseur ou autres...).

Le jeu tel qu'illustré sur la figure 3 consiste par exemple en une série de questions 1, 2, 3, ...à choix multiples A), B) C), ... ou "quizz". Dans ce cas, le type d'interactions possibles, pour chaque utilisateur, est, au moyen de son dispositif respectif, la sélection des chiffres 1, 2, 3.... Et des lettres A), B), C), ......

En référence à la figure 3, le système comprend:
- un premier dispositif de communication 1_{A} appartenant à un utilisateur A,
- un réseau de communication 2',
- un second dispositif 3' apte à communiquer de façon interactive avec le dispositif 1_{A}, via le réseau 2',
- un troisième dispositif 7_{B} appartenant à un utilisateur B et apte à communiquer de façon interactive avec le second dispositif 3', via le réseau 2',
- un serveur d'informations SERV 4' apte à communiquer, via le réseau 2', avec le dispositif 1_{A}, le dispositif 3' et le dispositif 7_{B}.

Dans le mode de réalisation décrit:
- le réseau 2' est de type Internet,
- le dispositif 1_{A} est semblable à celui représenté sur la figure 1 et décrit ci-dessus, et comporte de façon similaire :
   - une interface utilisateur 1'a, telle que par exemple, un clavier,
   - un module 1'b de connexion au réseau 2', tel que par exemple un navigateur Web, qui comporte une interface de communication 1'c apte à détecter le déclenchement d'un événement sur le téléphone mobile 1_{A}, tel que par exemple l'appui, par l'utilisateur, sur une touche (non représentée) du clavier 1'a,
   - une mémoire 1'd qui comporte un module applicatif 1'e apte à être lancé par le navigateur Web 1'b à chaque fois qu'un événement se déclenche sur certains éléments du téléphone 1_{A}, en particulier sur le clavier 1'a, afin de transmettre au serveur 4', dans le réseau 2', via un réseau mobile (non représenté), une requête R_{A}, par exemple de type http, signalant chaque événement détecté.

Dans le mode de réalisation décrit, le téléphone mobile 1_{A} est adapté pour transmettre au dispositif 3' des commandes saisies par l'utilisateur A à l'aide des touches du clavier 1'a. Parmi ces touches figurent par exemple les touches lettres "A", "B", "C", etc... et les touches chiffres « 0 » à « 9 », etc....

A cet effet, le téléphone mobile 1_{A} comprend en outre une mémoire 1'f dans laquelle sont mémorisés au préalable, par exemple sous forme d'une liste, les codes associés respectivement aux touches précitées.

Dans le mode de réalisation décrit, le serveur SERV 4' est semblable au serveur SERV 4 tel que représenté sur la figure 1 et décrit ci-dessus, et, à ce titre, est adapté afin que l'interface 43' transmette au dispositif 3', dans le réseau 2':
- des informations T_{A} associées à l'événement signalé par le téléphone 1_{A} et à partir duquel le dispositif 3' déclenchera une action déterminée telle que souhaitée par l'utilisateur A,
- mais également des informations T_{B} associées à l'événement signalé par l'utilisateur B et à partir duquel le dispositif 3' déclenchera une action déterminée telle que souhaitée par l'utilisateur B.

Dans le mode de réalisation décrit, le dispositif 7_{B} est un assistant personnel (PDA).

L'assistant personnel 7_{B} comporte, d'une façon similaire, au téléphone mobile 1_{A} précité :
- une interface utilisateur 7'a, telle que par exemple, un écran tactile,
- un module 7'b de connexion au réseau 2', tel que par exemple un logiciel d'émission/réception de requêtes http, qui comporte une interface de communication 7'c apte à détecter un événement déclenché par l'utilisateur B sur l'assistant personnel 7_{B}, tel que par exemple la sélection, par l'utilisateur B, d'une touche (non représentée) de l'écran tactile 7'a, au moyen d'un stylet prévu à cet effet,
- une mémoire 7'd qui comporte un module applicatif 7'e apte à être lancé par le logiciel d'émission/réception de requêtes 7'b à chaque fois que l'utilisateur B interagit avec l'écran 7'a, afin de transmettre au serveur SERV 4', dans le réseau 2', via un réseau mobile (non représenté), une requête R_{B}, par exemple de type http, signalant chaque événement détecté.

Plus particulièrement, l'assistant personnel 7 est adapté pour transmettre au dispositif 3 des commandes saisies par l'utilisateur à l'aide de certaines touches du clavier 7a, telles qu'en particulier les touches « OK », flèches « sens gauche »/ « sens droit »/ « sens montant »/ « sens descendant ».

Dans le mode de réalisation décrit, le serveur SERV 4' est semblable à celui représenté sur la figure 1 et décrit ci-dessus. De façon similaire, il comporte un processeur 40', une mémoire morte 41', une mémoire vive 42', et des moyens 43' de communication avec le téléphone mobile 1_{A} de l'utilisateur A, avec le PDA 7_{B} de l'utilisateur B ou avec le dispositif 3' qui va être décrit ci-dessous. Dans l'exemple représenté, les moyens de communication 43' comprennent une interface de type Internet.

Dans l'exemple représenté sur la figure 3, le serveur 4' est adapté afin que l'interface 43' transmette au dispositif 3', dans le réseau 2':
- des informations T_{A} associées à l'événement signalé par le téléphone 1_{A} et à partir desquelles le dispositif 3' déclenchera une action déterminée telle que souhaitée par l'utilisateur A,
- mais également des informations T_{B} associées à l'événement signalé par le PDA 7_{B} et à partir desquelles le dispositif 3' déclenchera une action déterminée telle que souhaitée par l'utilisateur B.

Quant au dispositif 3', dans le mode de réalisation décrit, c'est un ordinateur, tel que par exemple un PC qui comporte une unité centrale 5' reliée à un écran AFF 6', sur lequel est affiché la première question n°1 du quizz: "où se lève le soleil?"

L'unité centrale 5' comporte en particulier:
- un module 5'a de connexion au réseau 2', tel que par exemple un navigateur Web, qui comporte une interface de communication 5'b apte à envoyer, à destination de l'écran AFF 6', une série de commandes telles que par exemple, la sélection du numéro de la question et la sélection des lettres A), B) ou C) correspondant aux réponses proposées,
- une mémoire 5'c qui comporte un module applicatif 5'd apte à être lancé par le navigateur Web 5'a dès réception, en provenance du serveur SERV 4', des informations T_{A} (respectivement T_{B}) associées à l'événement signalé par l'utilisateur A (respectivement l'utilisateur B), de façon à interpréter lesdites informations sous la forme d'une commande de modification du contenu de la page affichée et destinée à être envoyée vers l'écran AFF 6', via l'interface de communication 5'b.

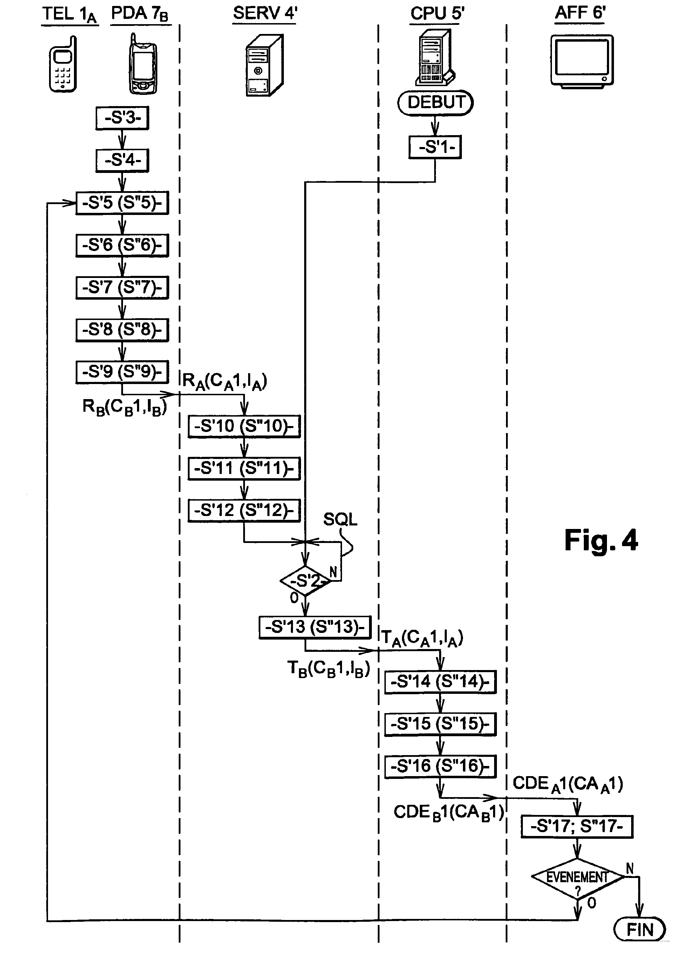

Comme dans le mode de réalisation décrit en référence à la figure 1, les différents modules applicatifs utilisés 1'e, 4'a, 4'c et 5'd et 7'e sont des bouts de programmes informatiques écrits de préférence en langage Javascript. Ces différents programmes informatiques sont adaptés à exécuter les principales étapes du procédé de télécommunications selon l'invention, ces principales étapes étant représentées sous la forme d'un organigramme qui va être décrit ci-dessous en référence à la figure 4.

L'utilisateur A du téléphone mobile TEL 1_{A} et l'utilisateur B du PDA 7_{B} souhaitent participer tous les deux à un quizz, le gagnant étant celui qui obtient le plus grand nombre de bonnes réponses, dans un minimum de temps.

Le quizz est affiché sur l'écran AFF 6' du PC 3' que peuvent visualiser en même temps les utilisateurs A et B. Comme on peut le voir sur la figure 3, la question n°1 "où se lève le soleil?" est affichée sur l'écran AFF 6' et appelle trois réponses possibles: A) au nord; B) à l'est; C) à l'ouest.

En référence à nouveau à la figure 4, au cours d'une étape préalable S'1, le navigateur Web 5'a de l'unité centrale 5' transmet, via le réseau 2', à destination du serveur 4', une requête Q' en fourniture d'une action à déclencher sur l'écran AFF 6'. Ladite requête est par exemple de type http et se présente sous une forme similaire à la requête Q précitée.

Suite à la réception de cette requête, l'interface 43' du serveur SERV 4' lance le module applicatif 4'c, ce qui déclenche, au cours d'une étape S'2, une interrogation périodique de la base de données 4'b, par exemple sous la forme de requêtes SQL, afin de déterminer si un événement y été mémorisé.

Au cours d'une étape S'3, l'utilisateur A allume son téléphone mobile 1_{A} et sélectionne, dans un menu déroulant qui s'affiche sur l'écran du téléphone, le champ "quizz". Au cours de cette même étape S'3, l'utilisateur B allume son PDA 7_{B} et sélectionne, dans un menu déroulant qui s'affiche sur l'écran du PDA 7_{B}, le champ "quizz". Au cours d'une étape S'4, une table de correspondance s'affiche sur l'écran du téléphone mobile 1_{A}, ladite table associant certaines touches du clavier 1'a du téléphone 1_{A} à respectivement certaines actions particulières à effectuer par le PC 3'. Au cours de cette même étape S'4, une table de correspondance analogue à celle précitée s'affiche sur l'écran du PDA 7_{B}.

Dans l'exemple représenté:
- l'utilisateur A, visualise sur l'écran de son téléphone que, par exemple, il faut appuyer sur l'une des touches "1", "2", "3", etc..., pour sélectionner le numéro de la question posée, et sur la touche "2 ABC" en mode alphabétique pour sélectionner l'une des réponses possibles A), B) ou C),
- l'utilisateur B, visualise sur l'écran que, par exemple, il faut sélectionner l'une des touches tactiles "1", "2", "3", etc..., pour sélectionner le numéro de la question posée, et sur l'une des touches tactiles "A", "B", "C" pour sélectionner l'une des réponses possibles A), B) ou C).

Au cours d'une étape S'5, l'utilisateur A appuie sur la touche "1", tandis que l'utilisateur B sélectionne la touche tactile "1" pour sélectionner la question 1. Au cours d'une étape S'6:
- l'interface de communication 1'c du navigateur Web 1'b du téléphone 1_{A} détecte l'événement: appui sur touche "1",
- l'interface de communication 7'c du logiciel d'émission/réception de requêtes 7'b du PDA 7_{B} détecte l'événement: sélection de la touche tactile "1".

Suite à cette détection, au cours d'une étape S'7, le navigateur Web 1'b du téléphone mobile 1_{A} lance le module applicatif 1'e, tandis que le logiciel d'émission/réception de requêtes 7'b du PDA 7_{B} lance le module applicatif 7'e. Au cours d'une étape S'8:
- le module applicatif 1'e appelle la liste stockée dans la mémoire 1'f du téléphone mobile 1_{A} de façon à extraire le code C_{A}1 correspondant à la touche "1",
- le module applicatif 7'e appelle la liste stockée dans la mémoire 7'f du PDA 7_{B} de façon à extraire le code C_{B}1 correspondant à la touche "1".

Au cours d'une étape S'9:
- le navigateur Web 1'b du téléphone mobile 1_{A} déclenche, à destination du serveur SERV 4', via le réseau 2', une requête R_{A}, de type http, contenant le code C_{A}1, un identifiant I_{A} du téléphone mobile 1_{A}, tel que par exemple son "user agent", et éventuellement un second identifiant dans le cas où le PDA 7_{B} possèderait le même user-agent.
- le logiciel d'émission/réception de requêtes 7'b du PDA 7_{B} déclenche, à destination du serveur SERV 4', via le réseau 2', une requête R_{B}, de type http, contenant le code C_{B}1, un identifiant I_{B} du PDA 7_{B}, tel que par exemple son "user agent", et éventuellement un second identifiant dans le cas où le téléphone mobile 1_{A} possèderait le même user-agent.

Les requêtes R_{A} et R_{B} se présentent sous une forme similaire à la requête R précitée.

Après avoir reçu, lors d'une étape S'10, les requêtes http R_{A} et R_{B} précitées, l'interface 43' du serveur SERV 4' lance le module applicatif 4'a, ce qui déclenche, au cours d'une étape S'11, la mémorisation, dans la base de données 4'b, et en respectant l'ordre d'arrivée de réception des requêtes R_{A} et R_{B} de façon à déterminer quel est l'utilisateur qui a répondu le plus rapidement:
- du code C_{A}1 en association avec l'identifiant I_{A} du téléphone mobile 1_{A},
- du code C_{B}1 en association avec l'identifiant I_{B} du PDA 7_{B}.

Une fois les codes C_{A}1 et C_{B}1 mémorisés, et en réponse à la/les interrogation(s) de l'étape S'2, le module applicatif 4'c extrait, au cours d'une étape S'12, le code C_{A}1 mémorisé, puis le code C_{B}1 mémorisé. Cette extraction entraîne, au cours d'une étape S'13, la transmission par l'interface de communication 43' du serveur 4', en réponse à la requête initiale Q en provenance de l'unité centrale 5':
- d'une requête T_{A} de type http, contenant le code C_{A}1 et l'identifiant I_{A} du téléphone mobile 1_{A},
- d'une requête T_{B} de type http, contenant le code C_{B}1 et l'identifiant I_{B} du PDA 7_{B}.

Suite à la réception de cette requête, le navigateur Web 5'a de l'unité centrale 5' lance le module applicatif 5'd au cours d'une étape S'14. Au cours d'une étape S'15, ce dernier appelle la liste stockée dans la mémoire 5'e, de façon à extraire:
- à partir du code C_{A}1 contenu dans la requête T_{A} reçue, le code d'action CA_{A}1 correspondant, dans l'exemple représenté, à la commande CDE_{A}1 qui surligne par exemple en bleu le numéro et le libellé de la question,
- à partir du code C_{B}1 contenu dans la requête T_{B} reçue, le code d'action CA_{B}1 correspondant, dans l'exemple représenté, à la commande CDE_{B}1 qui par exemple souligne en vert le numéro et le libellé de la question.

Une fois les codes d'action CA_{A}1 et CA_{B}1 extraits, l'interface 5'b du navigateur Web 5'a, au cours d'une étape S'16, transmet, à destination de l'écran AFF 6' :
- en premier lieu le code d'action CA_{A}1 sous la forme d'une commande CDE_{A}1,
- en second lieu le code d'action CA_{B}1 sous la forme d'une commande CDE_{B}1.

En réponse, au cours d'une étape S'17, l'écran AFF 6' effectue la commande CDE_{A}1 reçue en premier et surligne en bleu le numéro et le libellé de la question de façon à déterminer que c'est l'utilisateur A qui a sélectionné la question. Puis au cours de cette même étape, l'écran AFF 6' effectue la commande CDE_{B}1 reçue en second et souligne en vert le numéro et le libellé de la question de façon à déterminer que c'est l'utilisateur B qui a cette fois sélectionné la question.

Au cours d'une étape S"5, l'utilisateur A sélectionne "A" sur la touche "2 ABC" du clavier 1'a de son téléphone 1_{A} pensant que la réponse exacte à la question 1 est la réponse A). Au cours de cette même étape, l'utilisateur B sélectionne la touche tactile "B" de l'écran de son PDA 7_{B} pensant que la réponse exacte à la question 1 est la réponse B). Au cours d'une étape S"6:
- l'interface de communication 1'c du navigateur Web 1'b du téléphone 1_{A} détecte l'événement: *appui sur touche "A"*,
- l'interface de communication 7'c du logiciel d'émission/réception de requêtes 7'b du PDA 7_{B} détecte l'événement: *sélection de la touche tactile "B".*

Suite à cette détection, au cours d'une étape S"7, le navigateur Web 1'b du téléphone mobile 1_{A} lance le module applicatif 1'e, tandis que logiciel d'émission/réception de requêtes 7'b du PDA 7_{B} lance le module applicatif 7'e. Au cours d'une étape S"8:
- le module applicatif 1'e appelle la liste stockée dans la mémoire 1'f du téléphone mobile 1_{A} de façon à extraire le code C_{A}2 correspondant à la touche "A",
- le module applicatif 7'e appelle la liste stockée dans la mémoire 7'f du PDA 7_{B} de façon à extraire le code C_{B}2 correspondant à la touche tactile "A".

Au cours d'une étape S"9:
- le navigateur Web 1'b du téléphone mobile 1_{A} déclenche, à destination du serveur SERV 4', via le réseau 2', une requête R_{A}, de type http, contenant le code C_{A}2 et un identifiant I_{A} du téléphone mobile 1_{A}, tel que par exemple le "user-agent" de ce dernier,
- le logiciel d'émission/réception de requêtes 7'b du PDA 7_{B} déclenche, à destination du serveur 4', via le réseau 2', une requête R_{B}, de type http, contenant le code C_{B}2 et un identifiant I_{B} du PDA 7_{B}, tel que par exemple le "user-agent" de ce dernier.

Après avoir reçu, lors d'une étape S"10, les requêtes http R_{A} et R_{B} précitées, l'interface 43' du serveur 4' lance le module applicatif 4'a, ce qui déclenche, au cours d'une étape S"11, la mémorisation, dans la base de données 4'b, et en respectant l'ordre d'arrivée de réception des requêtes R_{A} et R_{B} de façon à déterminer quel est l'utilisateur qui a répondu le plus rapidement:
- du code C_{A}2 en association avec l'identifiant du téléphone mobile 1_{A},
- du code C_{B}2 en association avec l'identifiant du PDA 7_{B}.

Une fois les codes C_{A}2 et C_{B}2 mémorisés, et en réponse à la/les interrogation(s) de l'étape S'2, le module applicatif 4'c extrait, au cours d'une étape S"12, le code C_{A}2 mémorisé, puis le code C_{B}2 mémorisé. Cette extraction entraîne, au cours d'une étape S"13, la transmission par l'interface de communication 43' du serveur 4', en réponse à la requête initiale Q' en provenance de l'unité centrale 5':
- d'une requête T_{A} de type http, contenant le code C_{A}2 et l'identifiant du téléphone mobile 1_{A},
- d'une requête T_{B} de type http, contenant le code C_{B}2 et l'identifiant du PDA 7_{B}.

Suite à la réception de cette requête, le navigateur Web 5'a de l'unité centrale 5' lance le module applicatif 5'd au cours d'une étape S"14. Au cours d'une étape S"15, ce dernier appelle la liste stockée dans la mémoire 5'e, de façon à extraire:
- à partir du code C_{A}2 contenu dans la requête T_{A} reçue, le code d'action CA_{A}2 correspondant, dans l'exemple représenté, à la commande CDE_{A}2 qui surligne en bleu le chiffre A) et le libellé de la réponse associée: "AU NORD",
- à partir du code C_{B}2 contenu dans la requête T_{B} reçue, le code d'action CA_{B}2 correspondant, dans l'exemple représenté, à la commande CDE_{B}2 qui souligne en vert le chiffre B) et le libellé de la réponse associée: "A L'EST".

Une fois les codes d'action CA_{A}2 et CA_{B}2 extraits, l'interface 5'b du navigateur Web 5'a, au cours d'une étape S"16, transmet, à destination de l'écran AFF 6' :
- en premier lieu le code d'action CA_{A}2 sous la forme de la commande CDE_{A}2 précitée,
- en second lieu le code d'action CA_{B}2 sous la forme de la commande précitée CDE_{B}2.

En réponse, au cours d'une étape S"17, l'écran 6' effectue la commande CDE_{A}2 reçue en premier et surligne en bleu la lettre A) et le libellé de la réponse associée à ce chiffre de façon à déterminer que c'est l'utilisateur A qui a sélectionné cette réponse. Puis au cours de cette même étape, l'écran 6' effectue la commande CDE_{B}2 reçue en second et souligne en vert la lettre B) et le libellé de la réponse associée à ce chiffre de façon à déterminer que c'est l'utilisateur B qui a cette fois sélectionné la question.

A chaque nouvelle question du quizz, les étapes décrites ci-dessus sont réitérées.

Le quizz est terminé lorsque les utilisateurs A et B ont répondu à toutes les questions, le gagnant étant celui qui a obtenu le plus de bonnes réponses.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Ainsi par exemple, le serveur 4 (resp. 4'), au lieu d'être indépendant, comme c'est le cas sur la figure 1 (resp. fig.3), pourrait être intégré au téléviseur 3 resp. PC 3') par exemple.

Les différentes requêtes T (resp. T_{A}, T_{B}), pourraient par exemple être transmise directement au dispositif 3 (resp. 3'), sans qu'il soit nécessaire que le dispositif 3 (resp. 3') envoie au préalable une requête Q (resp. Q') au serveur 4 (resp. 4').

Enfin la transmission des requêtes pourrait bien sûr être effectuée selon un autre protocole que http.

## Revendications

1. Procédé de télécommunications interactif entre au moins des premier (1;1_{A}) et second (3;3') dispositifs de communication munis respectivement de moyens de connexion (1b; 1b'; 5a;5'a) à un réseau de communication, ledit procédé comprenant les étapes de :
- détermination par le second dispositif de communication d'une action à effectuer par ce dernier à l'initiative du premier dispositif de communication,
- déclenchement (S17; S'17) de ladite action déterminée par le second dispositif,
ledit procédé étant **caractérisé en ce qu'**il comprend, préalablement aux étapes de détermination et de déclenchement, les étapes de :
- transmission (S1;S'1), depuis les moyens de connexion du second dispositif de communication vers un dispositif de transmission (4; 4'), d'une requête en fourniture de ladite action à effectuer par le second dispositif à l'initiative du premier dispositif,
- recherche périodique (S2; S'2), dans ledit dispositif de transmission, afin de déterminer si ce dernier contient un identifiant reçu en provenance du premier dispositif et correspondant à une action à effectuer par le second dispositif,
- si le résultat de la recherche est positif, transmission (S13; S'13), depuis le dispositif de transmission vers le second dispositif de communication, d'une requête contenant ledit identifiant trouvé,
et **en ce que** l'étape de détermination consiste en la détermination (S14-S16; S'14-S'16), au niveau des moyens de connexion du second dispositif de communication, de l'action à effectuer par le second dispositif à l'initiative du premier dispositif, à partir de l'identifiant contenu dans ladite requête reçue.

2. Procédé selon la revendication 1, au cours duquel, au niveau des moyens de connexion du premier dispositif, ledit identifiant correspondant à une action à effectuer par le second dispositif est associé (S8; S'8) à un événement qui est :
- déclenché sur le premier dispositif de communication (1;1_{A}),
- détecté par lesdits moyens de connexion du premier dispositif,
- transmis au dispositif de transmission dans une requête en signalisation dudit événement détecté.

3. Système de télécommunications interactif entre au moins des premier (1; 1_{A}) et second (3; 3') dispositifs de communication munis respectivement de moyens de connexion (1b; 1b'; 5a;5'a) à un réseau de communication, ledit système étant **caractérisé en ce qu'**il comprend un dispositif de transmission (4; 4') qui comprend:
- des premiers moyens de communication (43; 43') pour recevoir, en provenance des moyens de connexion du second dispositif de communication, une requête en fourniture d'une action à effectuer par le second dispositif à l'initiative du premier dispositif,
- des moyens de traitement pour :
• rechercher périodiquement si le dispositif de transmission contient un identifiant reçu en provenance du premier dispositif et correspondant à une action à effectuer par le second dispositif,
• extraire ledit identifiant trouvé dans le cas où le résultat de la recherche est positif,
- des seconds moyens de communication (43; 43') pour transmettre au second dispositif de communication une requête contenant ledit identifiant trouvé,
et **en ce que** lesdits moyens (5a; 5'a) de connexion du second dispositif comportent des moyens de réception de ladite requête transmise, des moyens de traitement (5d; 5'd) pour déterminer, à partir dudit identifiant contenu dans la requête reçue, une action à effectuer par le second dispositif à l'initiative du premier dispositif, et des moyens de commande (5b; 5'b) pour déclencher ladite action déterminée sur le second dispositif.

4. Système selon la revendication 3, dans lequel les moyens (1b; 1'b) de connexion du premier dispositif comportent:
- des moyens (1c; 1'c) de détection d'un événement déclenché sur le premier dispositif, ledit événement correspondant à une action à effectuer par le second dispositif de communication à l'initiative du premier dispositif de communication,
- des moyens de traitement pour associer ledit événement détecté audit identifiant,
- et des moyens de transmission (1b; 1'b) pour transmettre au dispositif de transmission (4;4') une requête en signalisation dudit événement détecté contenant ledit identifiant.

5. Dispositif (4; 4') de transmission d'informations **caractérisé en ce qu'**il comprend:
- des premiers moyens de communication (43; 43') pour recevoir, en provenance d'un dispositif de communication, une requête en fourniture d'une action à effectuer par ledit dispositif à l'initiative d'un autre dispositif de communication,
- des moyens de traitement pour :
• rechercher périodiquement si ledit dispositif de transmission contient un identifiant reçu en provenance de l'autre dispositif et correspondant à une action à effectuer par ledit dispostif requérant,
• extraire ledit identifiant trouvé dans le cas où le résultat de la recherche est positif,
- des seconds moyens de communication (43; 43') pour transmettre à destination dudit dispositif requérant, une requête contenant ledit identifiant trouvé.

6. Programme d'ordinateur sur un support d'information, ledit programme étant susceptible d'être mis en oeuvre par un ordinateur, ce programme comportant des instructions adaptées à la mise en oeuvre d'un procédé de télécommunications selon la revendication 1 ou 2.

7. Support d'enregistrement lisible par un ordinateur sur lequel est enregistré un programme d'ordinateur comprenant des instructions pour l'exécution des étapes du procédé selon la revendication 1 ou 2.

## Claims

1. Interactive method of telecommunications between at least first (1; 1_{A}) and second (3; 3') communication devices furnished respectively with means of connection (1b; 1b'; 5a; 5'a) to a communication network, said method comprising the steps of:
- determination by the second communication device of an action to be performed by the latter on the initiative of the first communication device,
- triggering (S17; S'17) of said determined action by the second device,
said method being **characterized in that** it comprises, prior to the steps of determination and of triggering, the steps of:
- transmission (S1; S'1), from the means of connection of the second communication device to a transmission device (4; 4'), of a request in provision of said action to be performed by the second device on the initiative of the first device,
- periodic search (S2; S'2), in said transmission device, so as to determine whether the latter contains an identifier received from the first device and corresponding to an action to be performed by the second device,
- if the result of the search is positive, transmission (S13; S'13), from the transmission device to the second communication device, of a request containing said identifier found,
and **in that** the determination step consists of the determination (S14-S16; S'14-S'16), at the level of the means of connection of the second communication device, of the action to be performed by the second device on the initiative of the first device, on the basis of the identifier contained in said request received.

2. Method according to Claim 1, in the course of which, at the level of the means of connection of the first device, said identifier corresponding to an action to be performed by the second device is associated (S8; S'8) with an event which is:
- triggered on the first communication device (1; 1_{A}),
- detected by said means of connection of the first device,
- transmitted to the transmission device in a request in signalling of said detected event.

3. Interactive system of telecommunications between at least first (1; 1_{A}) and second (3; 3') communication devices furnished respectively with means of connection (1b; 1b'; 5a; 5'a) to a communication network, said system being **characterized in that** it comprises a transmission device (4; 4') which comprises:
- first communication means (43; 43') for receiving, from the means of connection of the second communication device, a request in provision of an action to be performed by the second device on the initiative of the first device,
- processing means for:
• periodically searching for whether the transmission device contains an identifier received from the first device and corresponding to an action to be performed by the second device,
• extracting said identifier found in the case where the result of the search is positive,
- second communication means (43; 43') for transmitting to the second communication device a request containing said identifier found,
and **in that** said means (5a; 5'a) of connection of the second device comprise means for receiving said transmitted request, processing means (5d; 5'd) for determining, on the basis of said identifier contained in the request received, an action to be performed by the second device on the initiative of the first device, and control means (5b; 5'b) for triggering said determined action on the second device.

4. System according to Claim 3, in which the means (1b; 1'b) of connection of the first device comprise:
- means (1c; 1'c) for detecting a triggered event on the first device, said event corresponding to an action to be performed by the second communication device on the initiative of the first communication device,
- processing means for associating said detected event with said identifier,
- and transmission means (1b; 1'b) for transmitting to the transmission device (4; 4') a request in signalling of said detected event containing said identifier.

5. Information transmission device (4; 4'), **characterized in that** it comprises:
- first communication means (43; 43') for receiving, from a communication device, a request in provision of an action to be performed by said device on the initiative of another communication device,
- processing means for:
• periodically searching for whether said transmission device contains an identifier received from the other device and corresponding to an action to be performed by said requesting device,
• extracting said identifier found in the case where the result of the search is positive,
- second communication means (43; 43') for transmitting to said requesting device, a request containing said identifier found.

6. Computer program on an information medium, said program being able to be implemented by a computer, this program comprising instructions adapted to the implementation of a method of telecommunications according to Claim 1 or 2.

7. Recording medium readable by a computer on which is recorded a computer program comprising instructions for the execution of the steps of the method according to Claim 1 or 2.

## Patentansprüche

1. Interaktives Verfahren zur Telekommunikation zwischen mindestens ersten (1; 1_{A}) und zweiten (3; 3') Kommunikationsvorrichtungen, die je mit Anschlusseinrichtungen (1b; 1'b; 5a; 5'a) an ein Kommunikationsnetz versehen sind, wobei das Verfahren die Schritte aufweist:
- Bestimmung, durch die zweite Kommunikationsvorrichtung, einer von dieser letzteren auf Initiative der ersten Kommunikationsvorrichtung auszuführenden Aktion,
- Auslösen (S17; S'17) der durch die zweite Vorrichtung bestimmten Aktion,
wobei das Verfahren **dadurch gekennzeichnet ist, dass** es vor den Schritten der Bestimmung und der Auslösung die Schritte enthält:
- Übertragung (S1; S'1), ausgehend von den Anschlusseinrichtungen der zweiten Kommunikationsvorrichtung an eine Übertragungsvorrichtung (4; 4'), einer Anforderung zur Lieferung der von der zweiten Vorrichtung auf Initiative der ersten Vorrichtung auszuführenden Aktion,
- periodische Recherche (S2; S'2) in der Übertragungsvorrichtung, um zu bestimmen, ob letztere eine Kennung enthält, die von der ersten Vorrichtung kommend empfangen wurde und einer von der zweiten Vorrichtung durchzuführenden Aktion entspricht,
- wenn das Ergebnis der Recherche positiv ist, Übertragung (S13; S'13), ausgehend von der Übertragungsvorrichtung an die zweite Kommunikationsvorrichtung, einer die gefundene Kennung enthaltenden Anforderung,
und dass der Schritt der Bestimmung aus der Bestimmung (S14-S16; S'14-S'16), im Bereich der Anschlusseinrichtungen der zweiten Kommunikationsvorrichtung, der von der zweiten Vorrichtung auf Initiative der ersten Vorrichtung auszuführenden Aktion ausgehend von der in der empfangenen Anforderung enthaltenen Kennung besteht.

2. Verfahren nach Anspruch 1, während dem, im Bereich der Anschlusseinrichtungen der ersten Vorrichtung, die einer von der zweiten Vorrichtung auszuführenden Aktion entsprechende Kennung einem Ereignis zugeordnet wird (S8; S'8), das:
- in der ersten Kommunikationsvorrichtung (1; 1_{A}) ausgelöst wird,
- von den Anschlusseinrichtungen der ersten Vorrichtung erfasst wird,
- an die Übertragungsvorrichtung in einer Anforderung der Anzeige des erfassten Ereignisses übertragen wird.

3. Interaktives System zur Telekommunikation zwischen mindestens ersten (1; 1_{A}) und zweiten (3; 3') Kommunikationsvorrichtungen, die je mit Anschlusseinrichtungen (1b; 1'b; 5a; 5'a) an ein Telekommunikationsnetz versehen sind, wobei das System **dadurch gekennzeichnet ist, dass** es eine Übertragungsvorrichtung (4; 4') enthält, die enthält:
- erste Kommunikationseinrichtungen (43; 43'), um von den Anschlusseinrichtungen der zweiten Kommunikationsvorrichtung kommend eine Anforderung zur Lieferung einer von der zweiten Vorrichtung auf Initiative der ersten Vorrichtung auszuführenden Aktion zu empfangen,
- Verarbeitungseinrichtungen, um:
• periodisch zu recherchieren, ob die Übertragungsvorrichtung eine Kennung enthält, die von der ersten Vorrichtung kommend empfangen wurde und einer von der zweiten Vorrichtung auszuführenden Aktion entspricht,
• die gefundene Kennung in dem Fall zu entnehmen, in dem das Ergebnis der Recherche positiv ist,
- zweite Kommunikationseinrichtungen (43; 43'), um an die zweite Kommunikationsvorrichtung eine die gefundene Kennung enthaltende Anforderung zu übertragen,
und dass die Anschlusseinrichtungen (5a; 5'a) der zweiten Vorrichtung Empfangseinrichtungen der übertragenen Anforderung,
Verarbeitungseinrichtungen (5d; 5'd), um ausgehend von der in der empfangenen Anforderung enthaltenen Kennung eine Aktion zu bestimmen, die von der zweiten Vorrichtung auf Initiative der ersten Vorrichtung auszuführen ist, und
Steuereinrichtungen (5b; 5'b) aufweisen, um die in der zweiten Vorrichtung bestimmte Aktion auszulösen.

4. System nach Anspruch 3, bei dem die Anschlusseinrichtungen (1b; 1'b) der ersten Vorrichtung aufweisen:
- Einrichtungen (1c; 1'c) zur Erfassung eines in der ersten Vorrichtung ausgelösten Ereignisses, wobei das Ereignis einer Aktion entspricht, die von der zweiten Kommunikationsvorrichtung auf Initiative der ersten Kommunikationsvorrichtung auszuführen ist,
- Verarbeitungseinrichtungen, um das erfasste Ereignis der Kennung zuzuordnen,
- und Übertragungseinrichtungen (1b; 1'b), um an die Übertragungsvorrichtung (4; 4') eine Anforderung zur Anzeige des die Kennung enthaltenden, erfassten Ereignisses zu übertragen.

5. Vorrichtung (4; 4') zur Informationsübertragung, **dadurch gekennzeichnet, dass** sie enthält:
- erste Kommunikationseinrichtungen (43; 43'), um von einer Kommunikationsvorrichtung kommend eine Anforderung zum Liefern einer Aktion zu empfangen, die von der Vorrichtung auf Initiative einer anderen Kommunikationsvorrichtung auszuführen ist,
- Verarbeitungseinrichtungen, um:
• periodisch zu recherchieren, ob die Übertragungsvorrichtung eine Kennung enthält, die von der anderen Vorrichtung kommend empfangen wurde und einer von der anfordernden Vorrichtung auszuführenden Aktion entspricht,
• die gefundene Kennung in dem Fall zu entnehmen, in dem das Ergebnis der Recherche positiv ist,
- zweite Kommunikationseinrichtungen (43; 43'), um an die anfordernde Vorrichtung eine die gefundene Kennung enthaltende Anforderung zu übertragen.

6. Computerprogramm auf einem Informationsträger, wobei das Programm von einem Computer durchgeführt werden kann, wobei dieses Programm Anweisungen aufweist, die für die Durchführung eines Telekommunikationsverfahrens nach Anspruch 1 oder 2 geeignet sind.

7. Computerlesbarer Aufzeichnungsträger, auf dem ein Computerprogramm aufgezeichnet ist, das Anweisungen zur Ausführung der Schritte des Verfahrens nach Anspruch 1 oder 2 enthält.
